# EUROPEAN PATENT APPLICATION

(11) **EP 4 807 902 A1**
(43) Date of publication of application: **16.09.2026**
(21) Application number: 26163511.4
(22) Date of filing: 10.03.2026
(51) Int. Cl.: H01R 11/01, B60R 16/00, H01R 11/05, H01R 4/34, H01R 4/62

(54) **ELECTRICAL CONNECTOR**

(30) Priority: 10.03.2025 CN 202510282489
(71) Applicant: Aptiv Electrical Centers (Shanghai) Co., Ltd., Shanghai 200184 (CN)
(72) Inventor: SUN, Yulin, Shanghai (CN); YU, Zengliang, Shanghai (CN); XU, Yuanliang, Shanghai (CN); LIN, Jun, Shanghai (CN); WU, Xiaoxiang, Shanghai (CN); CHEN, Ran, Shanghai (CN)
(74) Representative: Bardehle Pagenberg Partnerschaft mbB Patentanwälte Rechtsanwälte

(57) **Abstract**

This application relates to an electrical connector. An electrical connector according to this application comprises: an outer housing; and a composite terminal assembly mounted within the outer housing, wherein the composite terminal assembly comprises a contact terminal, and further comprises a flexible adapter, wherein the flexible adapter comprises an adapting portion for connecting with the contact terminal, and a wiring portion for connecting with a conductive busbar. The electrical connector may be a high-voltage connector of a DC charging harness for electric vehicle.

## Description

### Technical Field

This application relates to the technical field of electric connector, particularly, relates to a high-voltage connector suitable for charging harnesses of electric vehicle.

### Background Technology

During the development of electric vehicle, aluminum busbar may be used to replace copper wires in charging harnesses to achieve weight reduction and cost savings. However, the hardness of aluminum busbar is higher than that of traditional copper wires. This may cause, during the course of assembly, stress applied to the contact terminal in electric connector when the position of the aluminum busbar has been adjusted. Excessive stress could damage the contact terminal, compromising the reliability and safety performance of the charging harness.

### Summary of Invention

The embodiments of the present application provide a high-voltage connector, wherein a flexible connection section is provided between a contact terminal and a conductive busbar (such as aluminum busbar), so as to enhance the reliability and safety performance of the high-voltage connector.

According to an aspect of this application, an electrical connector is proposed, the electrical connector comprises: an outer housing; and a composite terminal assembly mounted within the outer housing, wherein the composite terminal assembly comprises a contact terminal, and further comprises a flexible adapter, wherein the flexible adapter comprises an adapting portion for connecting with the contact terminal, and a wiring portion for connecting with a conductive busbar.

In the above solution of electrical connector, as optional implementation, the flexible adapter further comprises a transition portion provided between the adapting portion and the wiring portion.

In the above solution of electrical connector, as optional implementation, the transition portion is configured to bear the stress generated by the displacement of the conductive busbar, so as to produce a corresponding deformation.

In the above solution of electrical connector, as optional implementation, the flexible adapter is a soft copper bar.

In the above solution of electrical connector, as optional implementation, the flexible adapter is a flexible conductive busbar with a strength lower than that of the contact terminal.

In the above solution of electrical connector, as optional implementation, the adapting portion of the flexible adapter is welded to the tail of the contact terminal.

In the above solution of electrical connector, as optional implementation, the adapting portion of the flexible adapter and the contact terminal are connected by mechanical fastening means.

In the above solution of electrical connector, as optional implementation, an adapter through-hole is provided on the adapting portion of the flexible adapter, and a contact terminal through-hole is provided at the tail of the contact terminal, and a mechanical fastener passes through the adapter through-hole and the plug terminal through-hole to lock the flexible adapter and the contact terminal together.

In the above solution of electrical connector, as optional implementation, the wiring portion of the flexible adapter and the conductive busbar are connected by welding.

In the above solution of electrical connector, as optional implementation, the electrical connector further comprising an inner plastic shell installed within the outer housing, wherein the inner plastic shell is to accommodate and secure the composite terminal assembly.

In the above solution of electrical connector, as optional implementation, the outer housing is provided with an outer housing operating hole, and an inner plastic shell operating hole is provided on the inner plastic shell, and the outer housing operating hole and the inner plastic shell operating hole are in communication with each other.

In the above solution of electrical connector, as optional implementation, the conductive busbar is an aluminum busbar.

In the above solution of electrical connector, as optional implementation, the conductive busbar is a flattened end of an aluminum rod.

In the above solution of electrical connector, as optional implementation, the electrical connector is a high-voltage connector.

In the above solution of electrical connector, as optional implementation, the electrical connector is a connector of a DC charging harness.

### Brief Description of the Drawings

In order to provide a clearer explanation for the technical solution in the embodiments of the present application, a brief introduction will be given to the drawings required for the description of the embodiments. It is apparent that the drawings described below are only some embodiments of the present application. For those skilled in the art, other drawings can be obtained based on these drawings without creative labor.
Figure 1 is a perspective view of a high-voltage connector according to an embodiment of the present application.
Figure 2 is an exploded structural diagram of the high-voltage connector according to an embodiment of the present application.
Figure 3 is a top view of the high-voltage connector provided according to an embodiment of the present application.
Figure 4 is a cross-sectional view along an A-A direction of the high-voltage connector according to the embodiments of the present application.
Figure 5 is an exploded sectional view of the high-voltage connector according to the embodiment of the present application and corresponding to the perspective of Figure 4.
Figure 6 is a perspective view of a contact terminal, aluminum busbar, and flexible adapter according to an embodiment of the present application.
Figure 7 is a top view of the contact terminal, aluminum busbar, and flexible adapter according to the embodiments of the present application.
Figure 8 is a cross-sectional view along a B-B direction of the insertion terminal, aluminum busbar, and flexible adapter according to the embodiments of the present application.
Figure 9 is a perspective view of the high-voltage connector provided according to an embodiment of the present application from another perspective.
Figure 10 is a partial exploded structural diagram of the high-voltage connector according to the embodiment of the present application, corresponding to the perspective of Figure 9.

### Embodiments

The following will provide a clear and complete description of the technical solution in the embodiments of the present application, in conjunction with the accompanying drawings. Obviously, the described embodiments are only a part of the embodiments of the present application, not all of them. Based on the embodiments in this application, all other embodiments obtained by those skilled in the art without creative labor are within the scope of protection of this application.

In the description of this application, it should be noted that unless otherwise specified and limited, the terms "connected" and "connected" should be broadly understood, for example, they can be fixed connections, detachable connections, or integrated connections; It can be a mechanical connection, an electrical connection, or communication with each other; It can be directly connected or indirectly connected through an intermediate medium, and it can be a connection within two components or an interaction relationship between two components. For ordinary technical personnel in this field, the specific meanings of the above terms in this application can be understood according to the specific situation. In the description of this application, the meaning of "multiple" refers to two or more, unless otherwise specifically limited. In addition, the terms "first" and "second" are only used for descriptive purposes and cannot be understood as indicating or implying relative importance or implying the number of technical features indicated. Thus, the features limited to "first" and "second" may explicitly or implicitly include one or more features.

The following disclosure provides many different implementation methods or examples to achieve different structures of the present application. In order to simplify the disclosure of this application, specific examples of components and settings are described below. Of course, they are only examples and are not intended to limit the scope of this application.

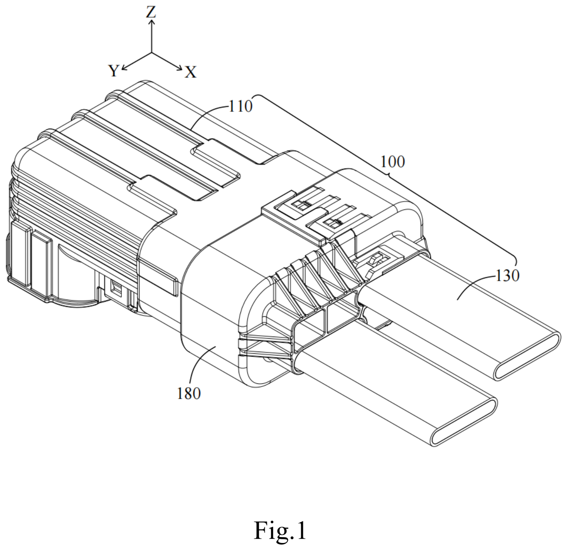

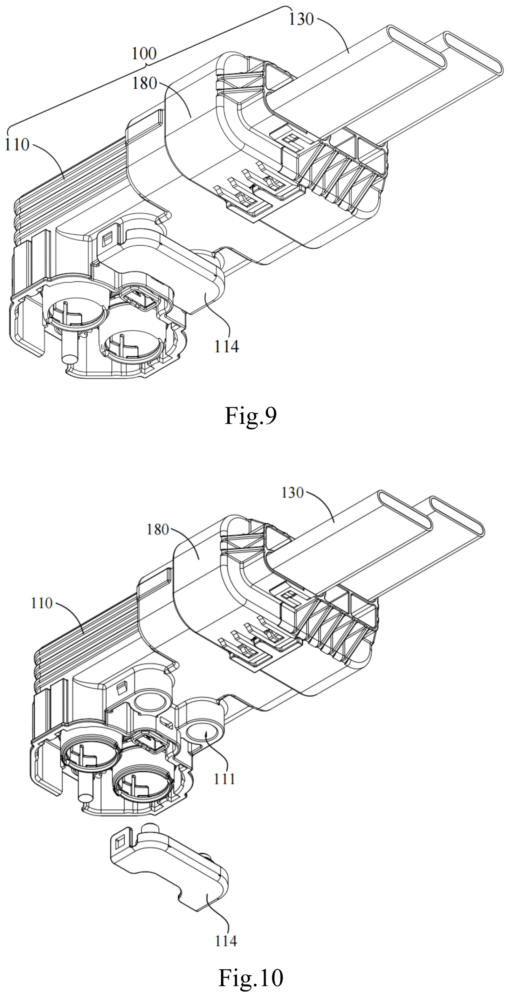

In the embodiments of the present application, referring to Figures 1 to 10, an exemplary high-voltage connector 100 is provided. The high-voltage connector 100 has a first direction X, a second direction Z, and a third direction Y that intersect each other in a Cartesian coordinate system. The first direction corresponds to the wiring direction of the tail end of the high-voltage connector 100, the third direction corresponds to the insertion direction of the front end of the high-voltage connector 100, and the second direction Y is perpendicular to the first direction X and the third direction Z.

Referring to Figures 1 to 2, the high-voltage connector 100 according to an embodiment of the present application may comprise (but is not limited to) the following components: an outer housing 110, a contact terminal 120 mounted inside the outer housing 110, a flexible adapter 140, and an aluminum bar 130 connected to the flexible adapter 140.

A part of the aluminum busbar 130 is mounted inside the outer housing110, and the aluminum busbar 130 is electrically connected to the contact terminal 120 through the flexible adapter 140.

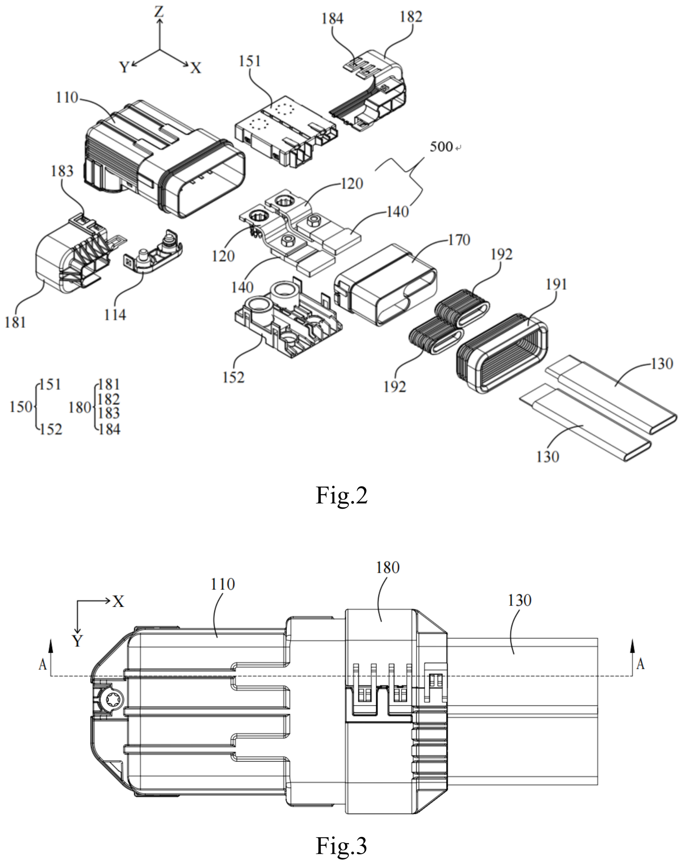

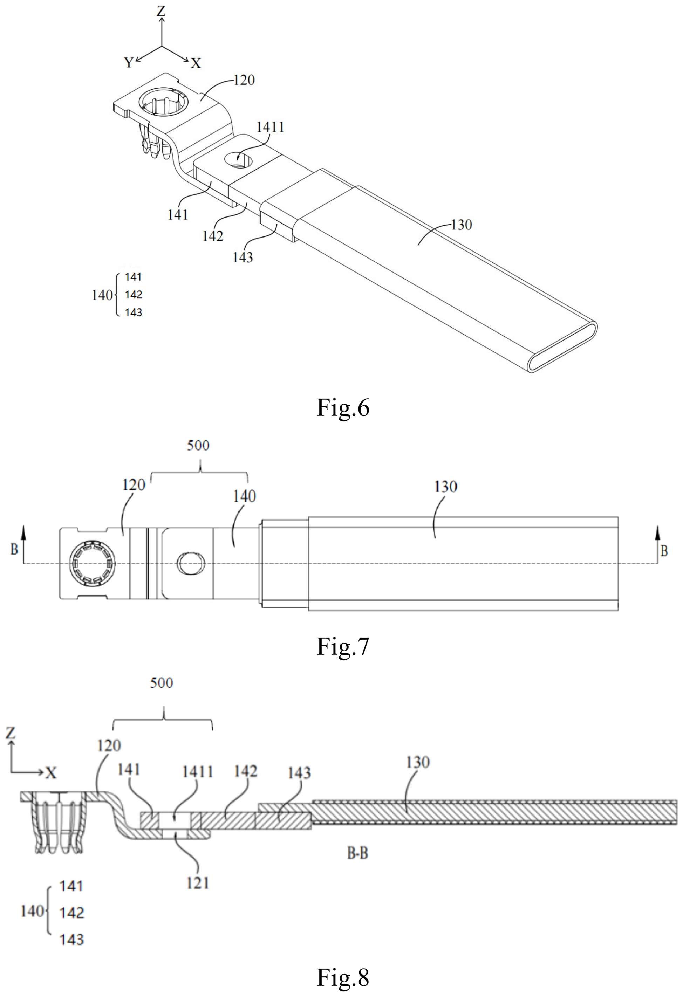

The contact terminal 120 is used to establish electrical connections with the terminal of another connector. For example, referring to Figures 2 and 8, the exemplary contact terminal 120 has a claw-shaped mating portion for establishing electrical connections with male terminal of another connector, however the present application is not limited to this.

The flexible adapter 140 is mounted within the outer housing 110, and disposed between the contact terminal 120 and the aluminum busbar 130, to form an electrical connection pathway consisting of the contact terminal 120, the flexible adapter 140, and the aluminum busbar 130. The flexible adapter 140 is configured to bear the stress generated by the displacement of the aluminum busbar 130, that is, the flexible adapter 140 can undergo corresponding deformation due to the displacement of the aluminum busbar 130, thereby eliminating the stress generated by the displacement of the aluminum busbar and applied to the high-voltage connector 100.

The following are application examples for materials of the above components.

The outer housing 110 may be made of insulating material. For example, in this application, the outer housing 110 is made of plastic, but not limited to this. However, in other implementations, the shell can be a metal shell to provide shielding effect.

Aluminum busbar 130 can be made of aluminum or aluminum alloy. In alternative implementations, aluminum busbar can be replaced with conductive busbar or conductive rod made of other metal or alloy materials.

The flexible adapter 140 can be made of flexible conductive materials. For example, in some embodiment of this application, the flexible adapter 140 may be a soft copper bar made of high-purity metal copper (such as red copper), but this application is not limited to this.

The contact terminal 120 may be made of conductive metal. For example, in some embodiment of this application, the contact terminal 120 is made of high-strength copper alloys such as copper zinc alloy and copper tin alloy, but not limited to these. The strength of the contact terminal 120 shall be higher than that of the flexible adapter 140, so that the absorption of stress mainly occurs in the flexible adapter 140. In this sense, the contact terminal 120 may be referred to as a rigid terminal, and the flexible adapter 140 can be referred to as a flexible conductive busbar with lower strength than that of the contact terminal.

This application achieves flexible electrical connection between the aluminum busbar 130 and the contact terminal 120 by providing a flexible adapter 140 between them. During the installation process of aluminum busbar 130, when the aluminum busbar 130 undergoes displacement, it will apply stress to the flexible adapter 140, causing it to deform under stress, while the contact terminal 120 is not to be affected. Therefore, the flexible adapter 140 can absorb the stress generated by the displacement of aluminum busbar 130, eliminating the impact of aluminum busbar 130 on the contact performance of contact terminal 120, improving the reliability and safety performance of high-voltage connector 100, and ensuring its normal use.

With reference to Figures 6-8, the following passages describe an exemplary construction of a composite terminal assembly consisting of a flexible adapter 140 and a contact terminal 120. The aluminum busbar 130 is connected to a composite terminal assembly 500 composed of a flexible adapter 140 and a rigid plug terminal 120. The flexible adapter 140 comprises an adapting portion 141, a transition portion 142, and a wiring portion 143. In particular, the adapter 141 is used for electrical and mechanical connection to the tail of the contact terminal 120, and the wiring 143 is used for electrical and mechanical connection to the aluminum busbar 130, and the transition 142 is disposed between the adapting portion 141 and the wiring portion 143.

The adapting portion141, the transition portion 142, and the wiring portion 143 of the flexible adapter 140 can be integrally formed, and thus they form different parts of the same structural component. For example, as shown in Figure 6, the adapting portion 141, the transition portion142, and the wiring portion 143 of the flexible adapter 140 may be an integrally cast structural component. In alternative implementation methods, the adapting portion, the transition portion, and the wiring portion can also be separated and fixedly connected to each other.

The adapting portion 141 of the flexible adapter 140 may be fixedly connected to the contact terminal 120 through appropriate process for persistent connection, such as welding processe. The wiring portion 143 of the flexible adapter 140 can be fixedly connected to the aluminum busbar 130 through a connection process, such as welding process. Exemplary welding process may comprise but are not limited to ultrasonic welding process or resistance welding process. In other implementation, other process for persistent connection, such as crimping, may be used.

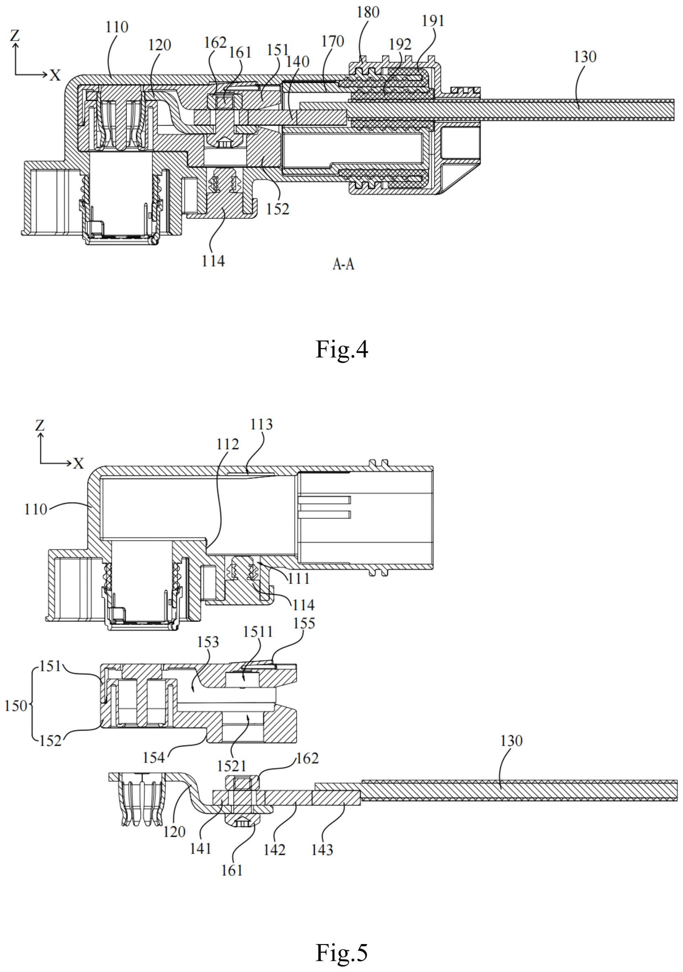

In some embodiments, there are additional mechanical fastening means between the contact terminal 120 and the flexible adapter 140. Referring to Figures 4-5 and Figures 6-8, a contact terminal through-hole 121 is opened at the tail of the contact terminal 120, and an adapter through-hole 1411 is opened on the adapting portion 141. The adapter through-hole 1411 is in communication with the contact terminal through-hole 121, so that the contact terminal 120 and the flexible adapter 140 can be interlocked by a locking means passing through the contact terminal through-hole 121 and the adapter through-hole 1411, thereby forming a composite terminal assembly 500. Specifically, referring to Figures 4-5, the locking means of the high-voltage connector 100 may comprise: a first fastening member 161 and a second fastening member 162. The first fastening member 161 (shown as a bolt in Figure 5) passes through the contact terminal through-hole 121 and the adapter through-hole 1411 and fixedly connected to the second fastening member 162 (shown as a nut in Figure 5), thereby mechanically connecting the contact terminal 120 to the adapting portion 141 and achieving electrical connection between the contact terminal 120 and the adapting portion 141. In other implementations, mechanical fastening approaches can be riveting or clamping fixation.

The following describes the installation and positioning of the composite terminal assembly 500 in the high-voltage connector 100. In some embodiments, referring to Figures 2-5, the high-voltage connector 100 may further comprise: an inner plastic shell 150, which is to be arranged inside the outer housing 110 and is used to secure and fix the contact terminal 120 and the flexible adapter 140. Specifically, the inner plastic shell 150 may comprise: an upper inner plastic shell cover 151 and a lower inner plastic shell cover 152 that can be interlocked, forming a terminal positioning cavity 153 by cooperating with each other. The composite terminal assembly 500 consisting of the contact terminal 120 and the flexible transition piece 140, is fixedly installed in the terminal positioning cavity 153 to achieve the position limiting and fixation of the contact terminal 120 and the flexible adapter 140, preventing the arbitrary movement of the contact terminal 120 and the flexible adapter 140. The upper inner plastic shell cover 151 and the lower inner plastic shell cover 152 may both be made of insulating material. For example, in some embodiment of this application, the upper inner plastic shell cover 151 and the lower inner plastic shell cover 152 may both be made of plastic, but are not limited thereto.

In some embodiments, as shown in Figure 5, a nut accommodating groove 1511 is formed on the inner plastic housing upper cover 151, and the second fastening member 162 (in the form of a nut) on the composite terminal assembly 500 may be embedded within the nut accommodating groove 1511.

Furthermore, an outer housing operation hole 111 is formed on the outer housing 110, and an inner plastic shell operation hole 1521 is formed on the inner plastic shell lower cover 152. The outer housing operation hole 111 and the inner plastic shell operation hole 1521 are in communication with teach other, allowing the first fastening member 161 (bolt) to pass through the outer housing operation hole 111 and the inner plastic shell operation hole 1521 to enter the inner plastic shell 150.

It can be understood that when the high-voltage connector 100 is assembled, as a preliminary step, the contact terminal 120 and the flexible adapter 140 may be assembled together in the form of the composite terminal assembly 500. Then, the contact terminal 120 and the flexible adapter 140 are preliminarily securing using the inner plastic shell upper cover 151 and the inner plastic shell lower cover 152. The assembled unit composed of the contact terminal 120, the flexible adapter 140, and the inner plastic shell 150 is then mounted into the outer housing 110, ensuring that the outer housing operating hole 111, the inner plastic shell operating hole 1521, the contact terminal through-hole 121, and the adapter through-hole 1411 are in communication with each other. The first fastening member 161 (bolt) is passes through the outer housing operating hole 111, the inner plastic shell operating hole 1521, the contact terminal through-hole 121, and the adapter through-hole 1411, and is secured with the second fastening member 162 (nut).

In some embodiments, referring to Figures 3-5, a first limiting step 112 is provided inside the outer housing 110, and a second limiting step 154 is provided on the lower cover 152 of the inner plastic shell. The second limiting step 154 is to be in contact with the first limiting step 112 to limit the position of the inner plastic shell 150, preventing excessive assembling of the inner plastic shell 150, ensuring the assembling position of the inner plastic shell 150 during assembly, and improving the assembly efficiency of the high-voltage connector 100.

The inner wall of the outer housing 110 is provided with a limiting groove 113, and an elastic limiting portion 155 is provided on the upper cover 151 of the inner plastic shell. The elastic limiting portion 155 is embedded within the limiting groove 113 to further achieve the limiting fixation between the outer housing 110 and the inner plastic shell 150, ensuring the structural stability of the inner plastic shell 150, and thereby ensuring the overall structural stability of the high-voltage connector 100, improving the reliability of the high-voltage connector 100.

In some embodiments, referring to Figures 4-5 and Figures 9-10, the high-voltage connector 100 further comprise a cover member 114, which is detachably connected to the outer housing 110, and the cover member 114 is to seal the outer housing operating hole 111 to ensure the overall airtightness of the high-voltage connector 100, improving the sealing performance of the high-voltage connector 100, and thereby enhancing the waterproof and safety performance of the high-voltage connector 100. The cover member 114 may be made of insulating material. For example, in this application, the cover member 114 is made of plastic, but not limited to this.

The cover member 114 and the outer housing 110 may be secured to each other by any mechanical fixation approach. For example, the cover member 114 and the outer housing 110 can be fixed by clamping or screwing, but not limited to these. A sealing element may also be provided between the cover member 114 and the outer shell 110 to ensure the airtightness of the connection between the cover member 114 and the outer shell 110, improving the waterproof performance of the high-voltage connector 100.

In some embodiments, referring to Figures 2-5, the high-voltage connector 100 may further comprise an intermediate plastic shell 170. The intermediate plastic shell 170 is installed near the rear side of the outer housing 110 which is facing the aluminum busbar 130, and the intermediate plastic shell 170 is used to accommodate and position the inner plastic shell 150. Meanwhile, the intermediate plastic shell 170 provides support for the waterproof rubber ring 191 at the tail of the high-voltage connector 110. At the rear side of the middle plastic shell 170, there are two aluminum busbar channels for the entry and exit of two aluminum busbars 130, and a waterproof rubber ring 192 is also located inside the two aluminum busbar channels.

In some embodiments, referring to Figures 2 to 5, the high-voltage connector 100 may further include a tail cover assembly 180. The tail cover assembly 180 comprise a left cover 181 and a right cover 182, with a latching protrusion 183 on the left cover 181 and a latching slot 184 on the right cover 182. The left cover 181 and the right cover 182 are matched with the latching protrusion 183 and the latching slot 184 to obtain a tail cover assembly 180. The tail cover assembly 180 is provided with two high-strength aluminum busbar channels, which are used to limit the two aluminum busbars 130 entering and exiting the high-voltage connector 110 and enhance its positional stability.

In this application, the charging harness connected to the connector is described as including an aluminum busbar, which is an example. It us appreciated that the "aluminum busbar" in the context of this application shall cover an aluminum conductive busbar which has an overall flat profile, as well as a flattened end of an aluminum rod conductive structure.

In this application, the high voltage connector is illustrated as a connector to be used in conjunction with an aluminum busbar of a charging harness. In the field of electric vehicles, high-voltage connector usually refer to DC connector that provides high voltage and high current capability and is for charging the dynamic battery. However, it can be understood that the problems identified herein and the proposed solution can be widely applied to various electrical connectors, without necessarily requiring their application scope to be high voltage or high current, also, it is not required that the charging harness is based on aluminum busbar.

Furthermore, the electrical connector solution proposed in this application can be widely used in various vehicles, including fuel vehicles, pure electric vehicles, hybrid electric vehicles, plug-in hybrid electric vehicles, electric bicycles, electric scooters, electric golf carts, electric trucks, etc., but not limited to these.

The above provides a detailed introduction to an electric connector provided in the embodiments of the present application. Specific examples are applied in the present application to explain the principles and implementation methods of the present application. The above embodiments are only used to help understand the technical solution and core idea of the present application; Ordinary technical personnel in this field should understand that they can still modify the technical solutions described in the aforementioned embodiments, or equivalently replace some of the technical features; And these modifications or substitutions do not deviate from the essence of the corresponding technical solutions from the scope of the technical solutions of the various embodiments of the present application.

## Claims

1. An electrical connector, **characterized by** comprising:
an outer housing (110); and
a composite terminal assembly (500) mounted within the outer housing, wherein the composite terminal assembly comprises a contact terminal (120), and further comprises a flexible adapter (140), wherein the flexible adapter (140) comprises an adapting portion (141) for connecting with the contact terminal, and a wiring portion (143) for connecting with a conductive busbar (130).

2. The electrical connector according to claim 1, **characterized in that** the flexible adapter (140) further comprises a transition portion (142) provided between the adapting portion (141) and the wiring portion (143).

3. The electrical connector as claimed in claim 1 or 2, **characterized in that** the transition portion (142) is configured to bear the stress generated by the displacement of the conductive busbar, so as to produce a corresponding deformation.

4. The electrical connector according to any one of the preceding claims, **characterized in that** the flexible adapter (140) is a soft copper bar.

5. The electrical connector according to any one of the preceding claims, **characterized in that** the flexible adapter (140) is a flexible conductive busbar with a strength lower than that of the contact terminal (120).

6. The electrical connector as claimed in any one of the preceding claims, **characterized in that** the adapting portion (141) of the flexible adapter (140) is welded to the tail of the contact terminal (120).

7. The electrical connector according to any one of the preceding claims, **characterized in that** the adapting portion (141) of the flexible adapter (140) and the contact terminal (120) are connected by mechanical fastening means.

8. The electrical connector according to any one of the preceding claims, **characterized in that** an adapter through-hole (1411) is provided on the adapting portion (141) of the flexible adapter (140), and a contact terminal through-hole (121) is provided at the tail of the contact terminal (120), and a mechanical fastener passes through the adapter through-hole and the plug terminal through-hole to lock the flexible adapter (140) and the contact terminal (120) together.

9. The electrical connector according to any one of the preceding claims, **characterized in that** the wiring portion (143) of the flexible adapter (140) and the conductive busbar (130) are connected by welding.

10. The electrical connector according to any one of the preceding claims, further comprising an inner plastic shell (150) installed within the outer housing (110), wherein the inner plastic shell (150) is to accommodate and secure the composite terminal assembly (500).

11. The electrical connector according to claim 10, **characterized in that** the outer housing (110) is provided with an outer housing operating hole (111), and an inner plastic shell operating hole (1521) is provided on the inner plastic shell (150), and the outer housing operating hole (111) and the inner plastic shell operating hole (1521) are in communication with each other.

12. The electrical connector according to any one of the preceding claims, **characterized in that** the conductive busbar (130) is an aluminum busbar.

13. The electrical connector according to any one of the preceding claims, **characterized in that** the conductive busbar (130) is a flattened end of an aluminum rod.

14. The electrical connector according to any one of the preceding claims, **characterized in that** the electrical connector is a high-voltage connector.

15. The electrical connector according to any one of the preceding claims, **characterized in that** the electrical connector is a connector of a DC charging harness.
